# EUROPÄISCHE PATENTSCHRIFT

(11) **EP 2 190 734 B1**
(45) Veröffentlichungstag und Bekanntmachung des Hinweises auf die Patenterteilung: **23.03.2011**
(21) Anmeldenummer: 08774132.8
(22) Anmeldetag: 18.06.2008
(51) Int. Cl.: B64C 1/10

(54) **LUFT- ODER RAUMFAHRZEUG MIT EINEM DRUCKSCHOTT UND VERFAHREN ZUM UNTERTEILEN EINES LUFT- ODER RAUMFAHRZEUGS**
AIRCRAFT OR SPACECRAFT WITH PRESSURE BULKHEAD AND METHOD FOR SUBDIVISION OF AN AIRCRAFT OR SPACECRAFT
AÉRONEF OU VÉHICULE SPATIAL COMPRENANT UNE CLOISON DE PRESSURISATION ET PROCÉDÉ POUR DIVISER UN AÉRONEF OU UN VÉHICULE SPATIAL

(30) Priorität: 18.09.2007 DE 102007044388; 18.09.2007 US 973286 P
(43) Veröffentlichungstag der Anmeldung: 02.06.2010
(73) Patentinhaber: Airbus Operations GmbH, 21129 Hamburg (DE)
(72) Erfinder: MISCHEREIT, Stephan, 21423 Winsen (DE); STEPHAN, Andreas, 21717 Fredenbeck (DE)
(74) Vertreter: Peckmann, Ralf
(86) Internationale Anmeldenummer: PCT/EP2008/057700
(87) Internationale Veröffentlichungsnummer: WO 2009/037008

(56) Entgegenhaltungen:
- WO-A-99/24316
- GB-A- 576 091

## Beschreibung

Die vorliegende Erfindung betrifft ein mittels eines Druckschotts unterteiltes Luft- oder Raumfahrzeug. Ferner betrifft die Erfindung ein Verfahren zum Unterteilen eines Luft- oder Raumfahrzeugs.

Obwohl auf Unterteilungen beliebiger Fahrzeuge oder Behältnisse anwendbar, werden die vorliegende Erfindung sowie die ihr zugrunde liegende Problematik in Bezug auf das hintere Druckschott eines Flugzeugs näher erläutert.

Bei sehr hoch fliegenden Flugzeugen wie z.B. modernen Verkehrsflugzeugen werden im allgemeinen Passagierraum, Cockpit und Frachtraum als eine druckdichte Kabine ausgeführt, innerhalb derer während des Fluges ein gegenüber dem Außendruck erhöhter Luftdruck aufrechterhalten werden kann, der Passagieren und Besatzung das Überleben ohne Sauerstoffmasken oder ähnliche Atemgeräte ermöglicht. Um eine solche Druckkabine zur Rückseite des Flugzeugrumpfs hin abzuschließen, wird herkömmlicher Weise im hinteren Bereich des Flugzeugrumpfs eine als Druckschott bezeichnete hermetische Trennwand eingebaut, die das Innere des Flugzeugrumpfs unterteilt in einen vorderen Abschnitt, der die Druckkabine bildet, und einen hinteren Abschnitt, in dem z.B. ein Hilfsantrieb zur Erzeugung von elektrischer Energie und Druckluft untergebracht ist.

Ein derartiges Druckschott kann z.B. in Form einer flachen, üblicherweise aus einer Aluminiumlegierung hergestellten Wand ausgeführt sein, die einem Spant gleich an der Außenhaut vernietet ist und so ihre Lasten, sowohl Kräfte als auch Biegemomente, in die umgebende Struktur ableitet. Da die Druckdifferenz zwischen Druckkabine und Außenluft sich bei jedem Wechsel der Flughöhe und insbesondere bei den zyklisch erfolgenden Starts und Landungen erheblichen Schwankungen unterliegt, führen z.B. die in die Außenhaut eingeleiteten Biegemomente zu entsprechend zyklisch veränderlichen Verformungen der Außenhaut und tragen damit zur Materialermüdung bei.

Andere Bauformen von Druckschotten verwenden z.B. die Form eines doppelt gekrümmten Kugelschalenabschnitts oder einer Kalotte, die zur Rückseite des Flugzeugrumpfs hin gewölbt sind, um auf diese Weise innere Spannungen im Material des Druckschotts und der Außenhaut zu reduzieren. So offenbart die WO 99/24316 einen Druckspant für Flugzeuge, bestehend aus einer Kalotte mit aufgesetzter Versteifungsstruktur. Die Verbindung zwischen dem Druckspant und dem Flugzeugrumpf geschieht über einen Verbindungswinkel, der über Verbindungselemente mit dem äußeren Rand der Kalotte sicher und dicht verbunden wird. Der Verbindungswinkel ist aus Titan hergestellt und stellt einen relativ biegeweichen Anschluss dar. Der reduzierten Einleitung mechanischer Spannungen in die umgebende Struktur steht bei derartigen Bauformen ein durch die Wölbung bedingter erhöhter Raumbedarf für das Druckschott gegenüber.

Es ist daher Aufgabe der vorliegenden Erfindung, eine Bauweise für ein Druckschott anzugeben, die bei geringem Raumbedarf die Einleitung mechanischer Spannungen in die umgebende Struktur reduziert.

Erfindungsgemäß wird diese Aufgabe durch ein Luft- oder Raumfahrzeug mit den Merkmalen des Patentanspruchs 1, sowie durch ein Verfahren zum Unterteilen eines, Luft- oder Raumfahrzeugs in einen Innendruck- und einen Außendruckbereich mit den Merkmalen des Patentanspruchs 20 gelöst.

Die der vorliegenden Erfindung zugrunde liegende Idee besteht darin, dass zur Bildung des Druckschotts eine Druckplatte verwendet wird, die einen entsprechend einer inneren Kontur des Luft- oder Raumfahrzeugs geformten Rand aufweist, wobei der Rand an der inneren Kontur kippbar abgestützt und abgedichtet wird. Da die Abstützung des Rands kippbar erfolgt, werden an der Abstützstelle nur Kräfte, jedoch keine Biegemomente zwischen Druckplatte und Außenhaut des Luft- oder Raumfahrzeugs übertragen. Verformungen der Druckplatte, die bei sich ändernder Druckdifferenz zwischen Innendruck- und Außendruckbereich auftreten, führen daher nur zu einem lokalen Verkippen des Randes der Druckplatte gegenüber der Außenhaut, d.h. zu einer Veränderung des Winkels, der zwischen jeweiligen Tangentialflächen der Außenhaut und der Druckplatte an der gemeinsamen Abstützstelle eingeschlossen ist.

Weil die kippbare Abstützung keine Biegemomente in die Außenhaut überträgt, werden mechanische Spannungen und damit Deformationen und Materialermüdung der Außenhaut vermieden. Dabei ist eine Wölbung der Druckplatte nicht erforderlich, so dass für das Druckschott wenig Raum benötigt wird und der im Flugzeug effektiv nutzbare Raum sich vergrößert.

In den Unteransprüchen finden sich vorteilhafte Ausgestaltungen und Verbesserungen der Erfindung.

Gemäß einer bevorzugten Weiterbildung des erfindungsgemäßen Luft- oder Raumfahrzeugs ist weiterhin ein Ringelement vorgesehen, welches die Druckplatte entlang ihres Randes einfasst. Die Abstützung des Rands durch die Abstützeinrichtung erfolgt in diesem Fall am Ringelement, und die Dichtung dichtet das Ringelement mit der inneren Kontur ab. Das Ringelement verleiht der Druckplatte zusätzliche Stabilität. Vorzugsweise weist das Ringelement als Werkstoff Stahl-, Titan-, Aluminium- oder kohlefaserverstärktem Kunststoff auf.

Vorzugsweise weist das Ringelement ein L-förmiges Profil mit einem ersten und einem zweiten Profilschenkel auf. Dabei verläuft der erste Profilschenkel parallel zur Hauptebene der Druckplatte und liegt an der Druckplatte auf Seiten des Auβendruckbereichs an. Dieser Schenkel stützt die Platte zur Richtung des Außendruckbereichs hin ab und nimmt die Kräfte auf, die auf die Platte wirken, wenn während des Flugs der Innendruck höher als der Außendruck beträgt. Der zweite Profilschenkel verläuft senkrecht zur Hauptebene der Druckplatte entlang deren Rand. Dieser Schenkel umfasst den Rand der Platte, so dass diese stabil im Ringelement gehalten wird und sich nicht seitlich verschieben kann.

Gemäß einer bevorzugten Weiterbildung ist die Druckplatte dazu ausgebildet, durch eine Druckdifferenz zwischen dem Innendruck- und dem Außendruckbereich im Ringelement gehalten zu werden. Dies ermöglicht, dass der Rand der Platte sich gegenüber dem Ringelement verschiebt, wenn z.B. die Platte durch Einwirkung der Druckdifferenz zwischen Innendruck- und Außendruckbereich deformiert wird. Hierdurch wird eine Verformung des Ringelements selbst vermieden, was die Einleitung von Spannungen in die umgebende Struktur weiter reduziert.

Gemäß einer weiteren bevorzugten Weiterbildung ist die Druckplatte mit dem Ringelement vernietet, verschraubt oder verklebt. Dies ermöglicht, die Verbindung zwischen Platte und Ringelement besonders stabil und dicht auszuführen.

Gemäß einer bevorzugten Weiterbildung sind weiterhin Gegenhalter vorgesehen, die die Druckplatte zum Innendruckbereich hin abstützen. Dies hat den Vorteil, dass die Druckplatte auch dann sicher gehalten wird, wenn zwischen Innendruck- und Außendruckbereich keine Druckdifferenz besteht, wie z.B. regelmäßig am Erdboden der Fall ist.

Gemäß einer bevorzugten Weiterbildung umfasst die Abstützeinrichtung mindestens eine Zuglasche, die vom Rand der Druckplatte entlang einer Innenseite einer Außenhaut des Luft- oder Raumfahrzeugs in den Innendruckbereich verläuft. Dabei ist die zuglasche mit einem Ende an der Druckplatte und mit einem anderen Ende an der Außenhaut befestigt Da eine derertig angeordnete zuglasche im Wesentlichen nur tangentiale Zugkräfte in die Außenhaut ableitet, werden Deformationen und Verspannungen der Außenhaut besonders wirksam vermieden. Da die Zuglasche zudem an ihren jeweiligen Enden befestigt ist, bleibt ihr mittlerer Abschnitt frei verformbar und kann Deformationen des Rands der Druckplatte bzw. des Ringelements nachgeben, ohne diese in die Außenhaut abzuleiten.

Vorzugsweise ist die zuglasche an der Außenhaut durch Vernieten befestigt. Die Nieten sorgen für eine sichere Krafteinleitung und werden in idealer weise fast rein mit Scherkräften belastet. Vorzugsweise ist die Zuglasche unterhalb eines Stringers des Luft- oder Raumfahrzeugs an der Außenhaut befestigt, was eine die Außenhaut besonders schonende Krafteinleitung ermöglicht.

Gemäß einer bevorzugten Weiterbildung umfasst die Abstützeinrichtung mindestens ein Gelenkelement. Ein erster Gelenkarm ist dabei am Rand der Druckplatte befestigt, ein zweiter Gelenkarm an einer Außenhaut des Luft- oder Raumfahrzeugs. Derartige Gelenkelemente ermöglichen es, große Kräfte in die Auβenhaut abzuleiten und gleichzeitig durch die Verschwenkbarkeit der Gelenkarme gegeneinander jede Übertragung von Biegemomenten besonders zuverlässig auszuschließen.

Vorzugsweise ist der zweite Gelenkarm an einem Versteifungselement befestigt, das die Außenhaut im Außendruckbereich versteift. Beispielsweise kann der zweite Gelenkarm an einem hinter dem Druckschott im Außendruckbereich verlaufenden Spant angebracht sein, was eine zuverlässige Krafteinleitung in die Umgebungsstruktur ermöglicht.

Vorzugsweise umfasst das Gelenkelement weiterhin einen Gelenkbolzen, der wesentlich in einer Richtung verläuft, die zum Rand der Druckplatte im Bereich der Befestigung des ersten Gelenkarms tangential ist. Ein so ausgerichteter Bolzen ermöglicht selektiv, dass der Rand der Druckplatte sich gegenüber der Außenhaut zum Außenhautbereich hin verkippt, wenn sich die Druckplatte aufgrund einer Druckdifferenz zwischen Innendruck- und Außendruckbereich durchbiegt. Gleichzeitig werden Verdrehungen in andere Richtungen unterbunden und so die Stabilität der Gesamtstruktur erhöht. Vorzugsweise weisen der erste und/oder zweite Gelenkarm einen Aluminium- und/oder Stahlwerkstoff auf, so dass hohe Kräfte zuverlässig übertragen werden. Der Gelenkbolzen weist vorzugsweise einen Stahlwerkstoff auf.

Gemäß einer bevorzugten Weiterbildung ist die Druckplatte als Kernverbundbauteil ausgebildet. Vorzugsweise umfasst das Kernverbundbauteil einen Kern mit einer Wabenstruktur und/oder einem Schaumwerkstoff, sowie eine Deckschicht mit einem kohlefaserverstärkten Kunststoffwerkstoff, einem glasfaserverstärkten Kunststoffwerkstoff und/oder einem Aluminiumwerkstoff. Ein derartiges Kernverbundbauteil zeichnet sich durch eine große Biegesteifheit bei geringem Eigengewicht aus.

Vorzugsweise ist die Druckplatte so ausgebildet, dass sie in einem Mittenbereich eine größere Steifheit aufweist als am Rand, z.B. durch einen dickeren Kern oder zusätzlich auflaminierte Decklagen. Dies ermöglicht, die unvermeidbare Verformung der Druckplatte unter Einwirkung der Druckdifferenz zu minimieren und dabei das Gewicht der Druckplatte niedrig zu halten.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine perspektivische ausschnitthafte Ansicht ei- nes Druckschotts in einem Luftfahrzeug gemäß ei- ner ersten Ausführungsform der Erfindung;
- Fig. 2: eine perspektivische Ansicht eines Detailaus- schnitts des Strukturbauteils aus Fig. 1;
- Fig. 3: eine Querschnittsansicht eines Druckschotts in einem Luftfahrzeug gemäß einer zweiten Ausfüh- rungsform der Erfindung; und
- Fig. 4: eine perspektivische Ansicht eines Detailaus- schnitts des Strukturbauteils aus Fig. 3.

In den Figuren bezeichnen dieselben Bezugszeichen gleiche oder funktionsgleiche Komponenten, soweit nichts Gegenteiliges angegeben ist.

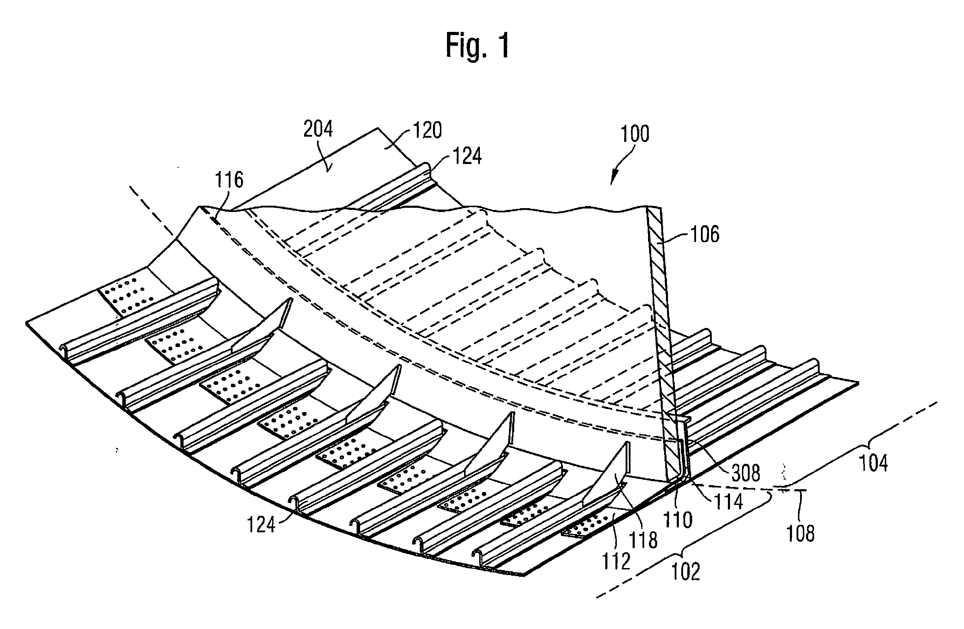

Figur 1 zeigt in perspektivischer Innenansicht einen Ausschnitt der Hülle eines Flugzeugrumpfs. Die Außenhaut 120 der Hülle ist an ihrer Innenseite 204 durch in Längsrichtung des Flugzeugs verlaufende Stringer 124 und zu diesen senkrecht entlang dem Umfang des Flugzeugrumpfs verlaufende Spanten 308 verstärkt.

Im Bereich des dargestellten Ausschnitts befindet sich ein Druckschott 100, das den Flugzeugrumpf entlang einer inneren Kontur 108 in einen Innendruck- 102 und einen Außendruckbereich 104 druckdicht unterteilt. Beispielsweise besteht der Innendruckbereich 102 aus einer den Passagierraum, den Frachtraum und das Cockpit umfassenden Druckkabine 102, während es sich bei dem Außendruckbereich 104 z.B. um einen hinter der Druckkabine 102 am Heck des Flugzeugs liegenden, zur Unterbringung eines Hilfsantriebs verwendeten Raum 104 handelt.

Das Druckschott 100 umfasst eine Druckplatte 106, deren Rand 110 entlang der inneren Kontur 108 verläuft, so dass der Querschnitt des Flugzeugrumpfs an der durch die innere Kontur gegebenen Position im Wesentlichen durch die Druckplatte 106 ausgefüllt wird. Der Übersichtlichkeit halber ist die Druckplatte in Fig. 1 transparent dargestellt, so dass die im Auβendruckbereich 104 angeordneten Abschnitte der Stringer 124 und der Spant 308 in Fig. 1 sichtbar sind. Die Druckplatte 106 ist als ein Sandwich- oder Kernverbundbauteil ausgeführt, d.h. sie besteht aus einem Kern mit einer Schaumstoff-, Waben- oder ähnlichen Struktur und auf beiden Seiten befindlichen, Zug- und Druckkraft aufnehmenden Decklagen. Für die Decklagen kann z.B. kohlefaser- oder glasfaserverstärkter Kunststoff oder ein Blech aus einer Aluminiumlegierung verwendet werden.

Der Rand der Druckplatte 106 ist von einem Ringelement 116 eingefasst, das ein L-förmiges Profil aufweist und die Druckplatte 106 sowohl in Richtung des Außendruckbereich 104 als auch in radialer Richtung des Flugzeugrumpfs, d.h. in Richtung zur Außenhaut 120 hin abstützt. Geeignete Werkstoffe für das Ringelement 116 sind Stahl, Titan, Aluminium oder kohlenstofffaserverstärkter Kunststoff. Der Rand 110 der Druckplatte 106 kann optional mit dem Ringelement 116 verklebt, verschraubt oder vernietet sein.

Das Ringelement 116 ist mit der Außenhaut 120 über zuglaschen 112 verbunden, die mit einem Ende am Ringelement 116 vernietet sind, an der Innenseite 204 der Außenhaut 120 entlang in den Innendruckbereich 102 verlaufen und im Innendruckbereich mittels Nieten 122 an der Außenhaut 120 befestigt sind. Geeignete Werkstoffe für die Zuglaschen 112 sind z.B. Stahl oder Titan. Eine Dichtung 114, die z.B. aus Gummi besteht, ist zwischen dem Ringelement 116 und dem auf der Außenhaut 120 aufsitzenden Spant 308 eingefügt und dichtet das Ringelement 116 gegenüber der Außenhaut 120 ab.

Im Flugbetrieb sinkt der Luftdruck im Außendruckbereich 104 in dem Maße, wie das Flugzeug an Flughöhe gewinnt. Im Innendruckbereich 102 wird ein gegenüber dem Außendruck erhöhter Luftdruck aufrechterhalten, so dass sich eine Druckdifferenz zwischen Innendruck- 102 und Außendruckbereich 104 aufbaut, die auf die Druckplatte 106 eine in Richtung des Außendruckbereichs 104 gerichtete Kraft ausübt. Diese Kraft drückt die Druckplatte 106 in das Ringelement 116, so dass die Druckplatte 106 auch ohne Vernietung, Verschraubung oder Verklebung im Ringelement 116 gehalten wird. Das Ringelement 116 nimmt die Andruckkraft der Druckplatte 106 in Richtung des Außendruckbereichs 104 auf und leitet sie als parallel zur Außenhaut 120 verlaufende Zugkraft über die zuglaschen 112 in die Außenhaut 120 ein.

Um die Druckplatte 106 auch dann sicher im Ringelement 116 zu halten, wenn z.B. bei Aufenthalt des Flugzeugs am Boden keine Druckdifferenz zwischen Innendruck- 102 und Außendruck 104 des Flugzeugs besteht, sind weiterhin Gegenhalter 118 vorgesehen, die auf Seiten des Innendruckbereichs 102 in regelmäβigen Abständen an den Stringern befestigt sind und die Druckplatte 106 in Richtung des Innendruckbereichs 102 abstützen.

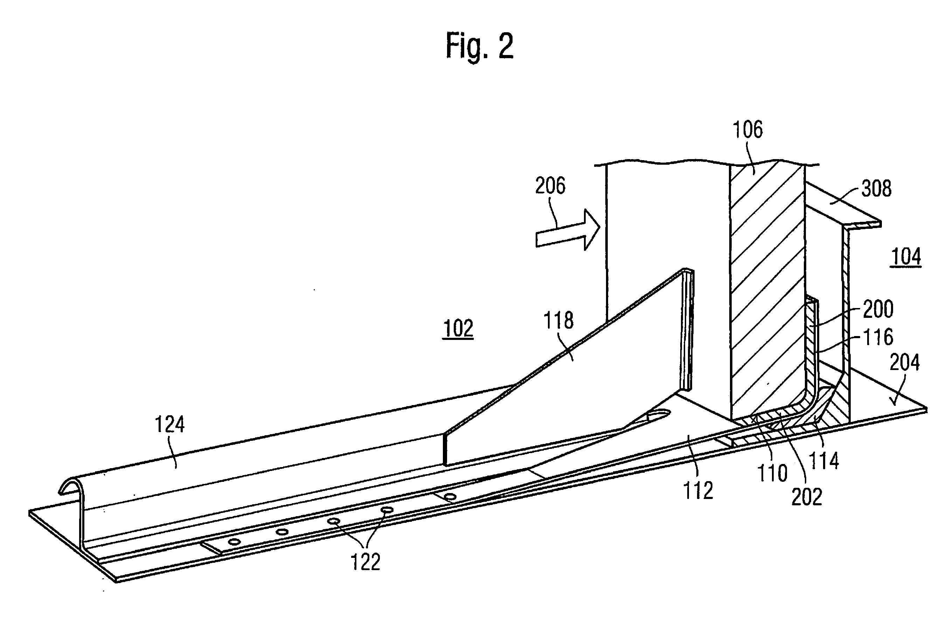

Die Abstützung der Druckplatte 106 soll anhand eines in Fig. 2 gezeigten Detailausschnitts des Strukturbauteils aus Fig. 1 näher erläutert werden. Das L-Profil des Ringelements 116 wird gebildet durch einen ersten Profilschenkel 200, der die Druckplatte 106 in Richtung des Außendruckbereichs 104 abstützt und einen zweiten Profilschenkel 202, der den Rand 110 der Druckplatte 106 einfasst, gebildet. Zwischen Druckplatte 106 und dem Ringelement 116 kann eine nicht gezeigte innere Dichtung z.B. aus einem Gummi- oder Schaumwerkstoff vorgesehen sein, die das Entweichen von Luft aus dem Innendruckbereich 102 durch etwa verbleibende Zwischenräume zwischen der Druckplatte 106 und dem Ringelement 116 verhindert. Die Abdichtung der Druckplatte 106 mit dem Ringelement 116 kann z.B. auch durch Verkleben der Druckplatte mit dem Ringelement erreicht sein.

Die Zuglasche 112 ist, vom Innendruckbereich 102 kommend, um .. beide Schenkel 202, 200 des Ringelements 116 herumgeführt und mit dem Ringelement 116 am ersten Schenkel 200 oder an beiden Schenkeln 200, 202 z.B. durch Vernieten mit hier nicht gezeigten Nieten befestigt. Bei Beaufschlagung der Druckplatte 106 mit einer Druckdifferenz 206 zwischen Innendruck- 102 und Außendruckbereich 104 wird die Zuglasche 112 auf Zug belastet. Die Nieten 122, mit denen die Zuglasche 112 an der Außenhaut 120 befestigt ist, wie auch die nicht gezeigten Nieten, mit denen die Zuglasche 112 am Ringelement 116 befestigt ist, werden dabei nahezu ausschließlich mit Scherkräften belastet.

Kommt es im Flugbetrieb aufgrund der Druckdifferenz 206 zu einer zumindest in geringem Umfang unvermeidlichen Auswölbung der Druckplatte 106 in Richtung des Außendruckbereichs 104, treten im Bereich des Randes 110 Kippmomente auf, die den Rand 110 der Druckplatte 106 in Richtung des Außendruckbereichs 104 zu kippen suchen. Diese Kippmomente werden jedoch durch die Zuglasche 112 nicht in die Außenhaut 120 abgeleitet, so dass es zu keiner Verbiegung der Außenhaut 120 kommt. Durch die Zugbelastung der Zuglaschen 112 werden diese in ihrer Länge gedehnt, so dass sich das Ringelement 116 geringfügig in Richtung des Außendruckbereichs 104 verschiebt und dabei die Dichtung 114 gegen den Spant 308 drückt.

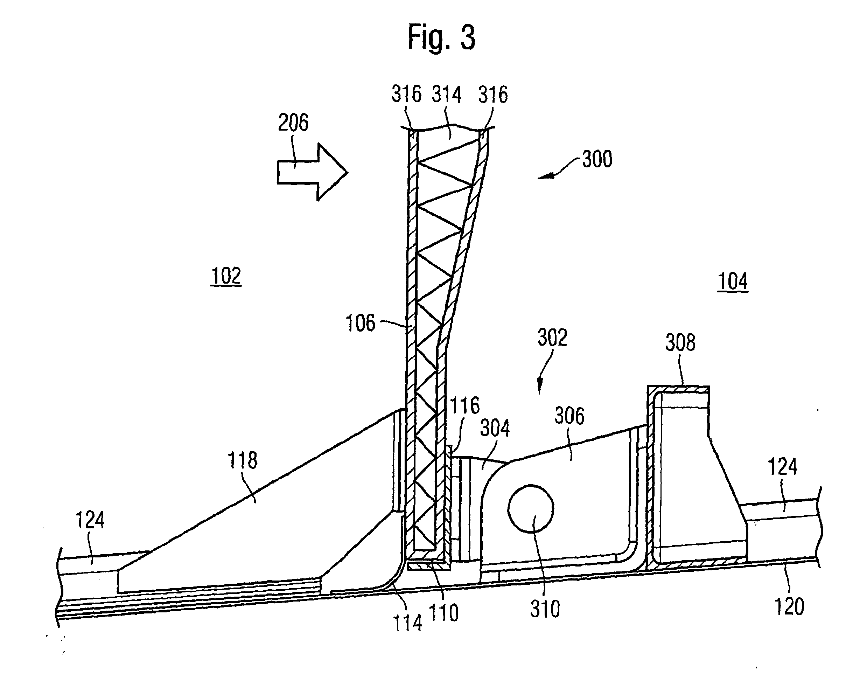

Figur 3 zeigt in Querschnittsansicht detailliert die Befestigung eines Druckschotts gemäß einer zweiten Ausführungsform. Wie bei der ersten, in Fig. 1 und 2 gezeigten Ausführungsform, umfasst das Druckschott eine Druckplatte 106, die in einem Ringelement 116 mit L-Profil gehalten wird. Ebenso sind Gegenhalter 118 vorgesehen, die an den Stringern 124 befestigt sind und die Druckplatte 106 gegen Herausfallen aus dem Ringelement 116 sichern, wobei die Druckplatte optional mit dem Ringelement 116 verklebt, verschraubt oder vernietet sein kann. Die Druckplatte 106 ist als ein Kernverbundbauteil 106 ausgeführt, das eine zwischen zwei Decklagen 316 eingeschlossene Faltwabenstruktur 314 aufweist. Sowohl die_Faltwabenstruktur 314 als auch die Decklagen 316 sind in einem Mittenbereich 300 der Druckplatte 106 dicker ausgeführt als am Rande 110, was der Druckplatte 106 im Mittenbereich 300 eine größere Steifheit verleiht und so der Druckplatte 106 die Eigenschaft verleiht, sich unter Einwirkung der Druckdifferenz 206 nur geringfügig zu verformen.

Abweichend von der Ausführungsform aus Fig. 1 und 2 wird das Ringelement 116 gegenüber der Außenhaut 120 und dem die Auβenhaut versteifenden Spant 308 mittels eines Gelenkelements 302 abgestützt, das im Außendruckbereich 104 zwischen dem Ringelement 116 und dem Spant 308 angeordnet ist. Das Gelenkelement 302 umfasst einen ersten Gelenkarm 304, der mit dem parallel zur Druckplatte 106 verlaufenden Schenkel des Ringelements 116 vernietet oder verschraubt ist. Ein zweiter Gelenkarm 306 ist sowohl gegenüber der Außenhaut 120 als auch gegenüber dem Spant 308 abgestützt und mit diesen z.B. durch Vernieten befestigt. Beide Gelenkarme 304, 306 sind über einen Gelenkbolzen 310, der parallel zur Druckplatte 306 und zur lokalen Tangente an die Außenhaut 120 parallel verläuft, gegeneinander verschwenkbar verbunden.

Eine z.B. aus Gummi gefertigte Dichtung 114, die das Ringelement 116 mit der Außenhaut abdichtet, ist abweichend von der ersten Ausführungsform im Innendruckbereich 102 angeordnet und wird direkt durch die Druckdifferenz 206 an Außenhaut 120 und Ringelement 116 angepresst.

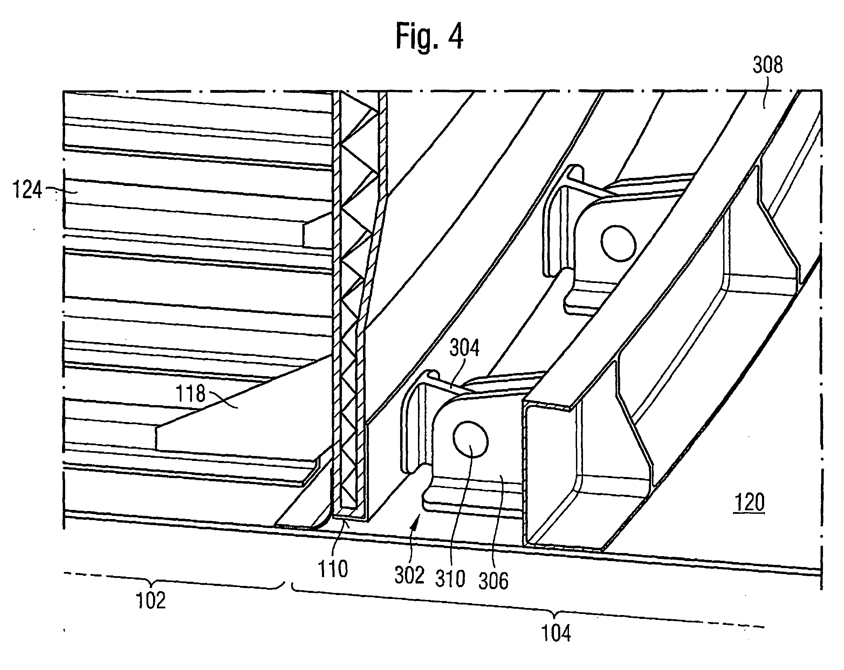

Die Abstützung der Druckplatte 106 in der in Fig. 3 gezeigten zweiten Ausführungsform wird durch die perspektivische Ansicht in Fig. 4 weiter verdeutlicht. Gelenkelemente 302 sind in regelmäßigen Abständen entlang dem Umfang des Flugzeugrumpfs angeordnet, wobei jeweils die Gelenkbolzen parallel zur lokalen Tangente an die Außenhaut ausgerichtet und somit zum Gelenkbolzen des jeweils benachbarten Gelenkelements 302 eine geringfügig abweichende Richtung aufweisen. Die zweiten Gelenkarme 306 der Gelenkelemente 302 sind jeweils als Augbolzengabel 302 ausgeführt, zwischen deren Zinken der jeweils zugehörige erste Gelenkarm 304 eingeschoben und durch den Gelenkbolzen 310 gelenkig verbunden ist. Die Gelenkbolzen sind z.B. aus Stahl gefertigt, die Gelenkarme 304, 306 ebenfalls aus Stahl oder aus Aluminium.

Im Flugbetrieb erfährt das Druckschott durch die Wirkung der Druckdifferenz zwischen Außendruck- 102 und Innendruckbereich 104 eine unvermeidliche Deformation, die zu einer lokalen Verkippung des Rands 110 der Druckplatte 106 gegenüber der Außenhaut 120 in Richtung des Außendruckbereichs 104 führt. Die Gelenkelemente 302 erlauben eine entsprechende Verkippung ihrer Gelenkarme 304, 306 gegeneinander, so dass die Deformation der Druckplatte keine Biegemomente in die Außenhaut 120 überträgt.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise können die Zuglaschen nicht oder nicht nur wie für die erste Ausführungsform gezeigt zwischen den Stringern angeordnet und mit der Außenhaut vernietet sein, sondern alternativ oder zusätzlich unter die Stringer, zwischen Stringer und Außenhaut geführt und mit beiden vernietet sein. Auch ist es möglich, eine einzige Zuglasche in Form eines angenäherten Zylindermantels vorzusehen, die um den gesamten Flugzeugrumpf verläuft. Weiterhin können z.B. Zuglaschen und Gelenkelemente in einer Ausführungsform kombiniert vorgesehen werden, in den gleichen oder unterschiedlichen Abschnitten der inneren Kontur des Flugzeugrumpfs.

Auch kann eine Druckplatte mehrteilig ausgeführt sein, wobei z.B. ein erster Teil einen Frachtraum unterhalb eines Passagierfußbodens und ein zweiter Teil einen Passagierraum oberhalb des Passagierfußbodens abschließt. Dichtungen können auf vielfältige Weise ausgeführt sein, z.B. auch als Gummi-Hohlprofile, die zum Innendruckbereich hin geöffnet sind und sich bei Absinken des Drucks im Außendruckbereich aufblähen.

### Bezugszeichenliste

- 100: Druckschott
- 102: Innendruckbereich
- 104: Außendruckbereich
- 106: Druckplatte
- 108: Innere Kontur des Luft- oder Raumfahrzeugs
- 110: Rand der Druckplatte
- 112: Zuglasche
- 114: Dichtung
- 116: Ringelement
- 118: Gegenhalter
- 120: Außenhaut
- 122: Nieten
- 124: Stringer
- 200: Erster Profilschenkel
- 202: Zweiter Profilschenkel
- 204: Innenseite
- 206: Druckdifferenz
- 300: Zentralbereich der Platte
- 302: Gelenkelement
- 304: Erster Gelenkarm
- 306: Zweiter Gelenkarm
- 308: Spant
- 310: Gelenkbolzen
- 314: Kern
- 316: Deckschicht

## Patentansprüche

1. Luft- oder Raumfahrzeug mit einem Druckschott (100), welches das Luft- oder Raumfahrzeug in einen Innendruck-(102) und einen Außendruckbereich (104) unterteilt, wobei das Druckschott (100) aufweist:
eine Druckplatte (106) mit einem entsprechend einer inneren Kontur (108) des Luft- oder Raumfahrzeugs geformten Rand (110); **dadurch gekennzeichnet, dass** das Druckschott (100)
eine Abstützeinrichtung (112, 302) aufweist, welche den Rand (110) kippbar an der inneren Kontur (108) abstützt; und weiterhin
eine Dichtung (114) aufweist, welche den Rand (110) mit der inneren Kontur (108) abdichtet.

2. Luft- oder Raumfahrzeug nach Anspruch 1,
**dadurch gekennzeichnet,**
**dass** das Druckschott (100) weiterhin ein Ringelement (116) aufweist, welches die Druckplatte (106) entlang ihres Randes (110) einfasst, wobei die Abstützeinrichtung (112, 302) das Ringelement (116) an der inneren Kontur abstützt und die Dichtung das Ringelement (116) mit der inneren Kontur (108) abdichtet.

3. Luft- oder Raumfahrzeug nach Anspruch 1 oder 2,
**dadurch gekennzeichnet,**
**dass** das Ringelement (116) einen Stahl-, Titan-, Aluminium- oder kohlefaserverstärktem Kunststoffwerkstoff aufweist.

4. Luft- oder Raumfahrzeug nach wenigstens einem der vorhergehenden Ansprüche,
**dadurch gekennzeichnet,**
**dass** das Ringelement (116) ein L-förmiges Profil aufweist, mit:
einem ersten Profilschenkel (200), welcher parallel zur Druckplatte (106) auf Seiten des Außendruckbereichs (104) an der Druckplatte (106) verläuft; und
einem zweiten Profilschenkel (202), welcher senkrecht zur Druckplatte (106) entlang deren Rand (110) verläuft.

5. Luft- oder Raumfahrzeug nach wenigstens einem der vorhergehenden Ansprüche,
**dadurch gekennzeichnet,**
**dass** die Druckplatte (106) dazu ausgebildet ist, durch eine Druckdifferenz (206) zwischen dem Innendruck- (102) und dem Außendruckbereich (104) im Ringelement (116) gehalten zu werden.

6. Luft- oder Raumfahrzeug nach wenigstens einem der vorhergehenden Ansprüche,
**dadurch gekennzeichnet,**
**dass** die Druckplatte (106) mit dem Ringelement (116) vernietet, verschraubt oder verklebt ist.

7. Luft- oder Raumfahrzeug nach wenigstens einem der vorhergehenden Ansprüche,
**dadurch gekennzeichnet,**
**dass** weiterhin Gegenhalter (118) vorgesehen sind, welche die Druckplatte (106) zum Innendruckbereich (102) hin abstützen.

8. Luft- oder Raumfahrzeug nach wenigstens einem der vorhergehenden Ansprüche,
**dadurch gekennzeichnet,**
**dass** die Abstützeinrichtung (112, 302) mindestens eine Zuglasche (112) umfasst, welche vom Rand (110) der Druckplatte (106) entlang einer Innenseite (204) einer Außenhaut (120) des Luft- oder Raumfahrzeugs in den Innendruckbereich verläuft;
wobei die Zuglasche (112) mit einem Ende an der Druckplatte (106) und mit einem anderen Ende an der Auβenhaut (120) befestigt ist.

9. Luft- oder Raumfahrzeug nach Anspruch 8,
**dadurch gekennzeichnet,**
**dass** die Zuglasche (112) an der Außenhaut (120) durch Vernieten (122) befestigt ist.

10. Luft- oder Raumfahrzeug nach Anspruch 8 oder 9,
**dadurch gekennzeichnet,**
**dass** die Zuglasche (112) unterhalb eines Stringers (124) des Luft- oder Raumfahrzeugs an der Außenhaut (120) befestigt ist.

11. Luft- oder Raumfahrzeug nach wenigstens einem der vorhergehenden Ansprüche,
**dadurch gekennzeichnet,**
**dass** die Abstützeinrichtung (112, 302) mindestens ein Gelenkelement (302) umfasst, mit:
einem ersten Gelenkarm (304), welcher am Rand der Druckplatte (106) befestigt ist; und
einem zweiten Gelenkarm (306), welcher an einer Auβenhaut (120) des Luft- oder Raumfahrzeugs befestigt ist.

12. Luft- oder Raumfahrzeug nach Anspruch 11,
**dadurch gekennzeichnet,**
**dass** der zweite Gelenkarm (306) an einem Versteifungselement (308), welches die Außenhaut (120) im Außendruckbereich (104) versteift, befestigt ist.

13. Luft- oder Raumfahrzeug nach Anspruch 11 oder 12,
**dadurch gekennzeichnet,**
**dass** das Gelenkelement (302) weiterhin einen Gelenkbolzen (310) umfasst, welcher wesentlich in einer tangentialen Richtung zum Rand (110) der Druckplatte (106) im Bereich der Befestigung des ersten Gelenkarms (304) verläuft.

14. Luft- oder Raumfahrzeug nach wenigstens einem der Ansprüche 11 bis 13,
**dadurch gekennzeichnet,**
**dass** der erste (304) und/oder zweite (306) Gelenkarm einen Aluminium- und/oder Stahlwerkstoff aufweisen.

15. Luft- oder Raumfahrzeug nach wenigstens einem der Ansprüche 11 bis 14,
**dadurch gekennzeichnet,**
**dass** der Gelenkbolzen (310) einen Stahlwerkstoff aufweist.

16. Luft- oder Raumfahrzeug nach wenigstens einem der vorhergehenden Ansprüche,
**dadurch gekennzeichnet,**
**dass** die Druckplatte (106) als Kernverbundbauteil (314, 316) ausgebildet ist.

17. Luft- oder Raumfahrzeug nach Anspruch 16,
**dadurch gekennzeichnet,**
**dass** das Kernverbundbauteil (314, 316) einen Kern (314) mit einer Wabenstruktur (314) und/oder einem Schaumwerkstoff aufweist.

18. Luft- oder Raumfahrzeug nach Anspruch 16 oder 17,
**dadurch gekennzeichnet,**
**dass** Kernverbundbauteil (314, 316) mindestens eine Deckschicht (316) mit einem kohlefaserverstärkten Kunststoffwerkstoff, einem glasfaserverstärkten Kunststoffwerkstoff und/oder einem Aluminiumwerkstoff aufweist.

19. Luft- oder Raumfahrzeug nach wenigstens einem der Ansprüche 16 bis 18,
**dadurch gekennzeichnet,**
**dass** die Druckplatte (106) in einem Zentralbereich (300) eine größere Steifheit aufweist als am Rand (110).

20. Verfahren zum Unterteilen eines Luft- oder Raumfahrzeugs in einen Innendruck- (102) und einen Außendruckbereich (104), mit den Schritten:
Bereitstellen einer Druckplatte (106), welche einen entsprechend einer inneren Kontur (108) des Luft- oder Raumfahrzeugs geformten Rand (110) aufweist; **gekennzeichnet durch**
kippbares Abstützen (112, 302) des Randes (110) an der inneren Kontur (108); und
Abdichten (114) des Rands (110) mit der inneren Kontur (108).

## Claims

1. Aircraft or spacecraft comprising a pressure bulkhead (100) which subdivides the aircraft or spacecraft into an internal pressure region (102) and an external pressure region (104), wherein the pressure bulkhead (100) comprises a pressure plate (106) having an edge (110) shaped so as to correspond to an inner contour (108) of the aircraft or spacecraft, **characterized in that** the pressure bulkhead (100) comprises a supporting means (112, 302) which tiltably supports the edge (110) on the inner contour (108); and further comprises a seal (114) which seals the edge (110) with the inner contour (108).

2. Aircraft or spacecraft according to claim 1, **characterised in that** the pressure bulkhead (100) further comprises an annular element (116) that borders the pressure plate (106) along its edge (110), the supporting means (112, 302) supporting the annular element (116) on the inner contour and the seal sealing the annular element (116) with the inner contour (108).

3. Aircraft or spacecraft according to either claim 1 or claim 2, **characterised in that** the annular element (116) comprises a steel, titanium, aluminium or carbon fibre reinforced plastics material.

4. Aircraft or spacecraft according to at least one of the preceding claims, **characterised in that** the annular element (116) has an L-shaped profiled part, comprising:
a first profiled part leg (200) extending parallel to the pressure plate (106) on sides of the external pressure region (104) on the pressure plate (106); and
a second profiled part leg (202) extending perpendicularly to the pressure plate (106) along the edge (110) thereof.

5. Aircraft or spacecraft according to at least one of the preceding claims, **characterised in that** the pressure plate (106) is embodied to be retained in the annular element (116) by a pressure differential (206) between the internal pressure region (102) and the external pressure region (104).

6. Aircraft or spacecraft according to at least one of the preceding claims, **characterised in that** the pressure plate (106) is riveted, screwed or adhesively bonded to the annular element (116).

7. Aircraft or spacecraft according to at least one of the preceding claims, **characterised in that** counter supports (118) are also provided that support the pressure plate (106) toward the internal pressure region (102).

8. Aircraft or spacecraft according to at least one of the preceding claims, **characterised in that** the supporting means (112, 302) comprises at least one pull tab (112) extending from the edge (110) of the pressure plate (106) along an inner face (204) of an outer skin (120) of the aircraft or spacecraft into the internal pressure region; the pull tab (112) being fastened by one end to the pressure plate (106) and by another end to the outer skin (120).

9. Aircraft or spacecraft according to claim 8, **characterised in that** the pull tab (112) is fastened to the outer skin (120) by rivets (122).

10. Aircraft or spacecraft according to either claim 8 or claim 9, **characterised in that** the pull tab (112) is fastened to the outer skin (120) below a stringer (124) of the aircraft or spacecraft.

11. Aircraft or spacecraft according to at least one of the preceding claims, **characterised in that** the supporting means (112, 302) comprises at least one articulated element (302), comprising:
a first articulated arm (304) which is fastened to the edge of the pressure plate (106); and
a second articulated arm (306) which is fastened to an outer skin (120) of the aircraft or
spacecraft.

12. Aircraft or spacecraft according to claim 11, **characterised in that** the second articulated arm (306) is fastened to a reinforcing element (308) which reinforces the outer skin (120) in the external pressure region (104).

13. Aircraft or spacecraft according to either claim 11 or claim 12, **characterised in that** the articulated element (302) also comprises a joint bolt (310) extending substantially in a direction tangential to the edge (110) of the pressure plate (106) in the region of the fastening of the first articulated arm (304).

14. Aircraft or spacecraft according to at least one of claims 11 to 13, **characterised in that** the first (304) and/or second (306) articulated arms comprise an aluminium and/or steel material.

15. Aircraft or spacecraft according to at least one of claims 11 to 14, **characterised in that** the joint bolt (310) comprises a steel material.

16. Aircraft or spacecraft according to at least one of the preceding claims, **characterised in that** the pressure plate (106) is embodied as a sandwich component (314, 316).

17. Aircraft or spacecraft according to claim 16, **characterised in that** the sandwich component (314, 316) has a core (314) having a honeycomb structure (314) and/or a foam material.

18. Aircraft or spacecraft according to either claim 16 or claim 17, **characterised in that** the sandwich component (314, 316) has at least one cover layer (316) comprising a carbon fibre reinforced plastics material, a glass reinforced plastics material and/or an aluminium material.

19. Aircraft or spacecraft according to at least one of claims 16 to 18, **characterised in that** the pressure plate (106) is more rigid in a central region (300) than at the edge (110).

20. Method for subdivision of an aircraft or spacecraft into an internal pressure region (102) and an external pressure region (104), including the steps:
providing a pressure plate (106) having an edge (110) shaped so as to correspond to an inner contour (108) of the aircraft or spacecraft, **characterized by**
tiltably supporting (112, 302) the edge (110) on the inner contour (108); and
sealing (114) the edge (110) with the inner contour (108).

## Revendications

1. Aéronef ou véhicule spatial comprenant une cloison de pressurisation (100), laquelle divise l'aéronef ou le véhicule spatial en une zone de pression interne (102) et une zone de pression externe (104), la cloison de pressurisation (100) présentant :
- une plaque de pression (106) dotée d'un bord (110) formé conformément à un contour intérieur (108) de l'aéronef ou du véhicule spatial,
**caractérisé en ce que**
la cloison de pressurisation (100) comprend un dispositif d'appui (112, 302), qui appuie le bord (110) contre le contour intérieur (108) de façon basculante, et présente en outre un joint (114) qui assure l'étanchéité entre le bord (110) et le contour intérieur (108).

2. Aéronef ou véhicule spatial selon la revendication 1, **caractérisé en ce que** la cloison de pressurisation (100) comprend en outre un élément annulaire (116) qui borde la plaque de pression (106) le long de son bord (110), le dispositif d'appui (112, 302) appuyant l'élément annulaire (116) contre le contour intérieur et le joint assurant l'étanchéité entre l'élément annulaire (116) et le contour intérieur (108).

3. Aéronef ou véhicule spatial selon la revendication 1 ou 2, **caractérisé en ce que** l'élément annulaire (116) présente un matériau plastique renforcé par de l'acier, du titane, de l'aluminium ou des fibres de carbone.

4. Aéronef ou véhicule spatial selon au moins une des revendications précédentes, **caractérisé en ce que** l'élément annulaire (116) présente un profil en forme de L, avec une première branche de profil (200), qui s'étend parallèlement à la plaque de pression (106), du côté de la zone de pression externe (104), contre la plaque de pression (106) ; et une seconde branche de profil (202), qui s'étend perpendiculairement à la plaque de pression (106) le long de son bord (110).

5. Aéronef ou véhicule spatial selon au moins une des revendications précédentes, **caractérisé en ce que** la plaque de pression (106) est conçue pour être maintenue dans l'élément annulaire (116) sous l'effet d'une différence de pression (206) entre la zone de pression interne (102) et la zone de pression externe (104).

6. Aéronef ou véhicule spatial selon au moins une des revendications précédentes, **caractérisé en ce que** la plaque de pression (106) est rivetée, vissée ou collée à l'élément annulaire (116).

7. Aéronef ou véhicule spatial selon au moins une des revendications précédentes, **caractérisé en ce que** des éléments de contre-appui (118) sont également prévus, qui appuient la plaque de pression (106) en direction de la zone de pression interne (102).

8. Aéronef ou véhicule spatial selon au moins une des revendications précédentes, **caractérisé en ce que** le dispositif d'appui (112, 302) comprend au moins une languette de traction (112), qui s'étend du bord (110) de la plaque de pression (106) le long d'une face intérieure (204) d'une tôle extérieure (120) de l'aéronef ou du véhicule spatial dans la zone de pression interne, la patte de traction (112) étant fixée à la plaque de pression (106) à une extrémité et à la tôle extérieure (120) à l'autre extrémité.

9. Aéronef ou véhicule spatial selon la revendication 8, **caractérisé en ce que** la patte de traction (112) est fixée à la tôle extérieure (120) par rivetage (122).

10. Aéronef ou véhicule spatial selon la revendication 8 ou 9, **caractérisé en ce que** la patte de traction (112) est fixée à la tôle extérieure (120) au-dessous d'un raidisseur (124) de l'aéronef ou du véhicule spatial.

11. Aéronef ou véhicule spatial selon au moins une des revendications précédentes, **caractérisé en ce que** le dispositif d'appui (112, 302) comprend au moins un élément d'articulation (302) présentant :
- un premier bras articulé (304), qui est fixé au bord de la plaque de pression (106), et
- un second bras articulé (306), qui est fixé à une tôle extérieure (120) de l'aéronef ou du véhicule spatial.

12. Aéronef ou véhicule spatial selon la revendication 11, **caractérisé en ce que** le second bras articulé (306) est fixé à un élément de renforcement (308), qui renforce la tôle extérieure (120) dans la zone de pression externe (104).

13. Aéronef ou véhicule spatial selon la revendication 11 ou 12, **caractérisé en ce que** l'élément d'articulation (302) comprend également un boulon d'articulation (310), qui s'étend sensiblement dans une direction tangentielle par rapport au bord (110) de la plaque de pression (106) dans la zone de la fixation du premier bras articulé (304).

14. Aéronef ou véhicule spatial selon au moins une des revendications 11 à 13, **caractérisé en ce que** le premier (304) et/ou le second (306) bras articulés présentent un matériau en aluminium et/ou en acier.

15. Aéronef ou véhicule spatial selon au moins une des revendications 11 à 14, **caractérisé en ce que** le boulon d'articulation (310) présente un matériau en acier.

16. Aéronef ou véhicule spatial selon au moins une des revendications précédentes, **caractérisé en ce que** la plaque de pression (106) est conçue sous forme de composant sandwich (314, 316).

17. Aéronef ou véhicule spatial selon la revendication 16, **caractérisé en ce que** le composant sandwich (314, 316) possède un matériau de remplissage (314) présentant une structure alvéolée (314) et/ou un matériau en mousse.

18. Aéronef ou véhicule spatial selon la revendication 16 ou 17, **caractérisé en ce que** le composant sandwich (314, 316) possède au moins une couche de recouvrement (316) présentant un matériau plastique renforcé par des fibres de carbones, un matériau plastique renforcé par des fibres de verre et/ou un matériau en aluminium.

19. Aéronef ou véhicule spatial selon au moins une des revendications 16 à 18, **caractérisé en ce que** la plaque de pression (106) présente, dans une zone centrale (300), une rigidité plus élevée qu'au bord (110).

20. Procédé de division d'un aéronef ou véhicule spatial en une zone de pression interne (102) et une zone de pression externe (104), comprenant les étapes suivantes :
fourniture d'une plaque de pression (106), qui présente un bord (110) formé conformément à un contour interne (108) de l'aéronef ou du véhicule spatial,
**caractérisé par**
un appui basculant (112, 302) du bord (110) contre le contour intérieur (108), et
une étanchéification (114) entre le bord (110) et le contour intérieur (108).
